# EUROPEAN PATENT APPLICATION

(11) **EP 2 361 506 A1**
(43) Date of publication of application: **31.08.2011**
(21) Application number: 10460006.9
(22) Date of filing: 26.02.2010
(51) Int. Cl.: A23G 3/28, A23G 3/00

(54) **A method of printing on food products**

(71) Applicant: Garmada, Ryszard, 04-479 Warszawa (PL)
(72) Inventor: Garmada, Ryszard, 04-479 Warszawa (PL)
(74) Representative: Jedrzejewski, Michal

(57) **Abstract**

A method of printing on edible pieces, in particular on dragees coated with a layer of sugar made in the sugar coating process and with a shining paste, on chewing gum - sugar-coated and with a shining paste, on hard and filled caramel sweets without extra coating, on smooth caramel lollipops without extra coating or chocolate formed into chocolate products.

## Description

The subject matter of the invention is a method of printing on edible pieces, in particular on dragees coated with a layer of sugar made in the sugar coating process and with a shining paste, on chewing gum - sugar-coated and with a shining paste, on hard and filled caramel sweets without extra coating, on smooth caramel lollipops without extra coating or chocolate formed into chocolate products.

The known state-of-art methods (patent publications EP 1764002, US6823795) of painting directly on the surface of tablets and capsules used in pharmacy or on dragees traded on retail markets are aimed at reaching maximum production rates. Henceforth, the known solutions are based upon a printing medium distributed by means of various rotary printing equipment at highest speeds possible. The consequence thereof is poor quality of imprints. Resulting imprints are characterized with a low precision of reproduced images and with poor resolution as well. In addition, because of its destination, that technology generates high costs of matrixes and rotary bars, means also long times to replace and to start the machine, which eliminates the worthwhileness and usefulness in the case of small and medium investments.

In turn, the hitherto technologies of printing directly on chocolate products, used in the confectionary trade are based upon:
a) Time-consuming preparation of printing media, like icing, colored cocoa butter, coatings and upon making imprints by means of various, time-consuming and inefficient techniques, chiefly through screen printing (extremely expensive if used on the industrial scale); or
b) Laying imprints by means of very expensive robotized devices using the said printing media; or
c) Through slip sheets which are not useful for small, custom-made images and such a process is limited to praline shapes as offered by manufacturers of magnetic moulds.

In addition, the aforesaid technologies mean a narrow range of colors, and as a rule, white color - which is best visible on brown chocolate - cannot be used.

According to the invention herein referred to, the method of printing on food products, especially on dragees coated with a layer of sugar made in the sugar coating process and with a shining paste, on chewing gum - sugar-coated and with a shining paste, on hard and filled caramel sweets without extra coating, on smooth caramel lollipops without extra coating or chocolate formed into chocolate products, is characterized with the following:
1) Food products are conveyed from the loading magazine to the feeder, placed in the feeder cells , and then maintained in those cells in a stable position in two planes - horizontal and vertical - due to the pressure generated in a vacuum pump ;
2) Food products are conveyed to a pad printing machine, under the machine head provided with a bar-pad on which an image has been already transferred from a matrix covered with an alcohol solution-based edible grade ink ;
3) The bar-pad is brought to the surface of edible parts onto which the image already placed on the bar-pad is printed through a motion vertical to the surface said.
4) When an imprint has been made, food products will be removed from the feeder.

It is of advantage as the pad printing machine is provided at least with two bar-pads on which an image has been transferred from at least one matrix assigned to each of them. It is yet more advantageous if each matrix is covered with edible grade ink in different colors.

It is of advantage as food products are conveyed to successive bar-pads which transfer an image or images upon them.

It is of advantage as a stamp-pad is brought to the surface of an edible piece at least twice.

It is of advantage as when an imprint has been made, food products are removed from the feeder to the magazine by a pneumatic ejector.

It is of advantage as the feeder is provided either with a brush or vibrating feeder.

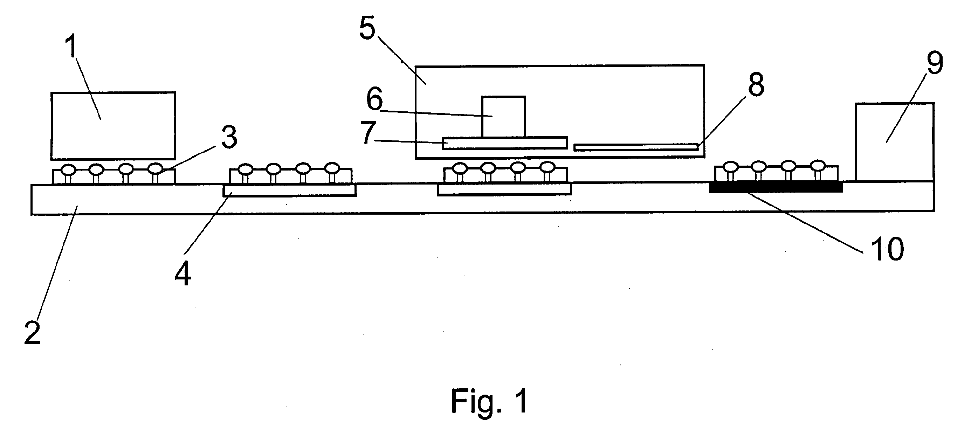

It is of advantage as the edible grade ink contains a mixture of pigments, stabilizer and alcohol solvent.
An exemplary version of the invention is illustrated in Fig. 1:
Food products are conveyed from loading magazine 1 to feeder 2 which is a brush feeder, and then placed in cells 3 of feeder 2 and kept in a stable position in two planes - horizontal and vertical due to the pressure generated by vacuum pump 4.
Food products are then conveyed to a pad printing machine 5, under the machine head 6 provided with a bar-pad 7 on which an image has been already transferred from a matrix 8 covered with an alcohol solution-based edible grade ink.

Bar-pad 7 is brought with a movement occurring in the plane vertical to the surface of edible parts on which the image placed on the bar-pad is printed. When an imprint has been made, food products will be removed from the feeder 2 to magazine 9 through pneumatic ejector 10.

Feeder 2 may be a version provided with a system for laying products with a brush feeder 3 or vibrating feeder with rails which place with precision the product into feeder cells 4.

According to the invention, the pad printing machine - as need may be - can be provided with one, a few or even a dozen or so bar-pads working at the same time. The selection of working pads is related either to a simultaneous laying of a few images in various colors or to an intended increase in production rates in the same time unit.

The pad printing technique - according to the invention - proves to be excellent for making imprints on uneven and irregular surfaces, e.g. on embossed sweets

Successful tests have been performed on:
a/ on dragees,viz. various sweets coated with a layer of sugar made in the sugar coating process and with a shining paste,
b/ on chewing gum - sugar-coated and with a shining paste,
c/ on hard and filled caramel sweets without extra coating,
d/ on smooth caramel lollipops without extra coating
e/ chocolate formed into chocolate products, e.g. bars, pralines.

Therefore, according to the invention, the method, unlike other known solutions, is characterized with high versatility.

According to the invention, the printing technique is characterized with the operation of the pad exclusively in the vertical plane, which means transferring a true copy of an image and with a high resolution (even up to 90 lines/inch).

The vertical operation of the stamp-pad, unlike the technologies based upon rotary equipment, eliminates the distortions of the image under transfer or a defect consisting in that only a part of an image is transferred. In addition, such an operation of a bar-pad allows a machine operator to repeat the transfer of an image onto the same object until the desired color saturation has been reached.

Also of significance in this method is the printing medium, viz. edible ink based upon alcohol solvents. All so-called edible inks, used in the hitherto technologies, chiefly in printers or computer plotters, are based upon natural or synthetic dyes; water is the solvent used in such inks. This type of inks is not useful for printing on sugar-coated surfaces, caramel or chocolate, since the printing process cannot secure the solving of the product surface under printing, which is indispensable for laying the image. The ink used in the method - according to the invention - is a mixture of pigments, a stabilizer and alcohol solvent. All components are provided with European safety sheets and pose no threat to the life or health of consumers. They are admitted into circulation in the European Union. Those are inks based upon alcohol solvents, since only such solvents can guarantee correct, sharp and well-colored imprints on the products aforesaid.

## Claims

1. The method of printing on food products, especially on dragees coated with a layer of sugar made in the sugar coating process and with a shining paste, on chewing gum - sugar-coated and with a shining paste, on hard and filled caramel sweets without extra coating, on smooth caramel lollipops without extra coating or chocolate formed into chocolate products ,is **characterized in that**:
1) Food products are conveyed from loading magazine 1 to feeder 2 and placed in cells 3 of feeder 2 and are kept in a stable position in two planes - horizontal and vertical due to the pressure generated by vacuum pump 4;
2) Food products are then conveyed to pad printing machine 5 , under the machine head 6 provided with bar-pad 7 on which an image has been already transferred from a matrix 8 covered with an alcohol solution-based edible grade ink ;
3) Bar -pad 7 is brought with a movement occurring in the plane vertical to the surface of edible parts on which the image placed on bar-pad 7 is printed ;
4) When an imprint has been made, food products will be removed from the feeder 2 .

2. The method of printing - according to Claim 1 - **characterized in that** the pad printing machine is provided with at least with two bar-pads 7 on which an image has been transferred from at least one matrix 8 assigned to each of them;

3. The method of printing - according to Claim 2 - **characterized in that** each matrix is covered with edible grade ink of different color.

4. The method of printing - according to Claims 2-3 - **characterized in that** food products are brought to successive bar-pads 7 which print an image or images on them;

5. The method of printing - according to Claims 1-4 - **characterized in that** bar-pad (7) is brought to the surface of an edible piece at least twice

6. The method of printing - according to Claims 1-5 - **characterized in that** when an imprint has been made, food products will be removed from the feeder 2 to magazine 9 through pneumatic ejector 10.

7. The method of printing - according to Claims 1-6 - **characterized in that** feeder 2 contains a brush or vibrating feeder.

8. The method of printing - according to Claims 1-7 - **characterized in that** the edible grade ink contains a mixture of pigments, a stabilizer and an alcohol solvent.
